# EUROPEAN PATENT APPLICATION

(11) **EP 1 182 714 A1**
(43) Date of publication of application: **27.02.2002**
(21) Application number: 00900879.8
(22) Date of filing: 24.01.2000
(51) Int. Cl.: H01M 2/08, H01M 2/02, B32B 15/08

(54) **PACKAGE FOR MATERIAL CONTAINING NONAQUEOUS SOLVENT AND CELL COMPRISING THE SAME**

(71) Applicant: MITSUBISHI DENKI KABUSHIKI KAISHA, Tokyo 100-8310 (JP)
(72) Inventor: YOSHIDA, Yasuhiro, Tokyo 100-8310 (JP); HIROI, Osamu, Tokyo 100-8310 (JP); NAKAO, Yukiyasu, Tokyo 100-8310 (JP); SHIOTA, Hisashi, Tokyo 100-8310 (JP); AIHARA, Shigeru, Tokyo 100-8310 (JP); TAKEMURA, Daigo, Tokyo 100-8310 (JP); URUSHIBATA, Hiroaki, Tokyo 100-8310 (JP); MURAI, Michio, Tokyo 100-8310 (JP); KURATA, Tetsuyuki, Tokyo 100-8310 (JP)
(74) Representative: Sajda, Wolf E., Dipl.-Phys.
(86) International application number: JP0000308
(87) International publication number: WO0156096

(57) **Abstract**

There is provided a package for a material containing a non-aqueous solvent by which water invasion from outside is lowered and adhesion strength is less decreased over the long term, and a non-aqueous electrolytic battery having a lengthened life and high reliability.

In a package for a material containing a non-aqueous solvent, having a bag construction made by adhesion of a part of a lamination film comprising a metal layer and a resin layer, a structure is positioned in an organic layer between the metal layers at the adhesion part to inhibit permeation of the non-aqueous solvent contained in the package.

## Description

### TECHNICAL FIELD

The present invention relates to a package for a material containing a non-aqueous solvent. More particularly, the present invention relates to a package for a material containing a non-aqueous solvent which can prevent water from invading externally and strength from decreasing over the long term, and to a non-aqueous electrolytic battery whose life is lengthened and reliability is heightened by using said package.

### BACKGROUND ART

Packages comprising a film such as an aluminum-laminated film are used in a wide range of fields including category of food because of its lightness in weight and excellent blocking for water or gas. While an outer housing made of metal such as stainless or aluminum is applied to practically used non-aqueous electrolytic batteries including typical lithium ion batteries so far, it is expected to apply these packages to non-aqueous electrolytic batteries. This is because weight saving and thin construction will be possible if the outer housing is replaced by the package comprising a film.

Problems still remain, however. A part of the film folded to cover a battery content is thermally melted to adhere and is formed liked a bag to prepare such a package comprising the film. Compared to the currently used metal outer housings these packages have inferior blocking against water invading into a battery and insufficient strength because of its adhesion part, which possibly causes troubles with long-term battery performance or reliability in high temperature.

As a means for improving the reliability of these packages, there are, for example, a process for maintaining credible sealing by laminating a protective film at a heat-sealed part as shown in Japanese Unexamined Patent Publication No. 40114/1999 and a process for maintaining credible sealing by constructing a heat-sealed part with a plurality of resins, i.e., a material having superior barrier performance against electrolytic solution and a material having excellent vapor barrier performance as shown in Japanese Unexamined Patent Publication No. 274896/1997. However, these processes have problems with increase of package weight and complicated steps.

The present invention has been carried out in order to solve the above problems. The object of the present invention is to provide a package for a material containing a non-aqueous solvent using a laminated film, by which water blocking is ensured and strength is maintained easily for a long time, and to provide a non-aqueous electrolytic battery using the same.

### DISCLOSURE OF INVENTION

The present inventors have studied on and found some important facts about water blocking and durability of adhesion strength concerning a package for a material containing a non-aqueous solvent using a laminated film. On one hand it was found that water blocking and adhesion strength of the package remarkably decreased because of the non-aqueous solvent diffused from the interior side of the package. This is because diffusion rate of water increases due to diffusion of the non-aqueous solvent into an organic layer of the adhesion part and also because strength of the organic layer itself decreases. Prevention of the diffusion from the interior side of the package is highly effective in improving package performances.

More specifically, the present invention relates to:
a package for a material containing a non-aqueous solvent, having a bag construction made by adhesion of a part of a lamination film comprising a metal layer and a resin layer, wherein a structure is positioned in an organic layer between the metal layers at the adhesion part to inhibit permeation of the non-aqueous solvent contained in the package (Claim 1);
a package for a material containing a non-aqueous solvent, having a bag construction made by adhesion of a part of a lamination film comprising a metal layer and a resin layer, wherein a hot-melt adhesive tape containing a structure for inhibiting permeation of the non-aqueous solvent contained in the package is used for the adhesion of the film (Claim 2);
the package for a material containing a non-aqueous solvent of Claim 1, wherein the material containing a non-aqueous solvent is an electrolytic solution, and wherein the structure for inhibiting permeation of the non-aqueous solvent contained in the package is capable of reacting with or absorbing the electrolytic solution (Claim 3);
the package for a material containing a non-aqueous solvent of Claim 2, wherein the material containing a non-aqueous solvent is an electrolytic solution, and wherein the structure for inhibiting permeation of the non-aqueous solvent contained in the package is capable of reacting with or absorbing the electrolytic solution (Claim 4);
the package for a material containing a non-aqueous solvent of Claim 1, wherein the structure for inhibiting permeation of the non-aqueous solvent contained in the package is distributed at the adhesion part inwardly to the package interior side (Claim 5);
the package for a material containing a non-aqueous solvent of Claim 2, wherein the structure for inhibiting permeation of the non-aqueous solvent contained in the package is distributed at the adhesion part inwardly to the package interior side (Claim 6);
the package for a material containing a non-aqueous solvent of Claim 1, wherein the structure for inhibiting permeation of the non-aqueous solvent contained in the package is linear and positioned in parallel to the longitudinal direction of the adhesion part (Claim 7);
the package for a material containing a non-aqueous solvent of Claim 2, wherein the structure for inhibiting permeation of the non-aqueous solvent contained in the package is linear and positioned in parallel to the longitudinal direction of the adhesion part (Claim 8);
the battery using the package for a material containing a non-aqueous solvent of Claim 1 (Claim 9); and
the battery using the package for a material containing a non-aqueous solvent of Claim 2 (Claim 10).

### BRIEF DESCRIPTION OF DRAWINGS

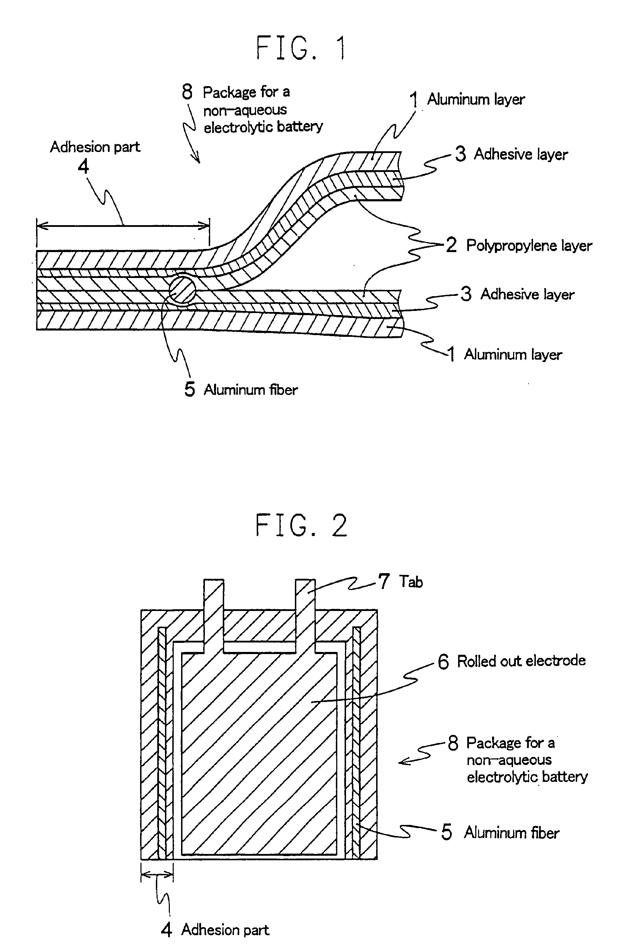

Fig. 1 is a cross-sectional view schematically showing the adhesion construction of the package for a material containing a non-aqueous solvent according to one embodiment of the present invention; and Fig. 2 is a cross-sectional view schematically showing the construction of the non-aqueous electrolytic battery prepared in Example 1.

In Fig. 1, numeral 1 indicates an aluminum layer, 2 a polypropylene layer, 3 an adhesive layer, 4 adhesion part and 5 an aluminum fiber.

In Fig. 2, numeral 4 indicates the adhesion part, 5 the aluminum fiber, 6 a rolled out electrode, 7 a terminal for current collection (tab) and 8 a package for a material containing an aqueous solvent.

### BEST MODE FOR CARRYING OUT THE INVENTION

The present invention relates to a package for a material containing a non-aqueous solvent, having a bag construction made by adhesion of a part of a lamination film comprising a metal layer and a resin layer, wherein a structure is positioned in an organic layer (i.e., the resin layer and an adhesive layer) between the metal layers at the adhesion part to inhibit permeation of the non-aqueous solvent contained in the package.

A film used for the package is formed by laminating at least a metal layer and a resin layer coating the package interior side of the metal layer.

Metal foil such as aluminum foil, stainless foil or titanium foil can be used for the metal layer. The thickness of the metal layer is preferably 3 to 200 µm, more preferably 10 to 100 µm. Too thin a metal film tends to cause easy generation of defects, such as pinholes, leading to inferior reliability. Too thick a metal layer tends to cause increase of weight. The surface of the metal layer may be treated, for example, so that an oxide film or a nitride film is formed thereon in order to improve endurance.

Any resin layer may be available as long as it does not dissolve into a non-aqueous solvent such as that of an electrolytic solution and prevents the metal layer from corroding. A polyolefin film such as polypropylene, polyethylene or a copolymer thereof is preferably used as the resin layer. Other useful films include a film comprising a fluorine resin, a vinyl polymer such as polystyrene, a cross-linked acrylic resin and the like. The thickness of the resin layer is preferably 5 to 200 µm, more preferably 20 to 100 µm. When the resin layer is thin, steady heat-sealing tends to become difficult. When the resin layer is thick, the strength at the heat-sealing part tends to decrease.

An adhesive can be used for the adhesion of the metal layer and the resin layer, if necessary. Coating or film lamination onto the package exterior side of the metal layer is also preferable for improving strength and preventing corrosion.

The package of the present invention has a bag construction made by adhesion of a part of a lamination film comprising a metal layer and a resin layer. An adhesive can be used for the adhesion of the film. A hot-melt adhesive is preferable as the adhesive in terms of workability, moisture permeability or the like. When polyolefin is used for the resin layer of the film, this can be used as a hot-melt adhesive for the adhesion of the film. An epoxy adhesive or an urethane adhesive can be also used as long as it is resistant to the non-aqueous solvent in the package. These adhesives can be combined for use. The resin layer at the adhesion part of the film may be removed if necessary. In this case attention should be paid not to generate defects such as crack on the metal layer. Also useful is an adhesive in the form of tape.

As to the structure for inhibiting permeation of the non-aqueous solvent in the package, any material can be used as long as it prevents the non-aqueous solvent in the package from diffusing into the organic layer between the metal layers at the adhesion part. Those capable of reacting with or absorbing the non-aqueous solvent are preferable as the structure for inhibiting permeation of the non-aqueous solvent in the package. Useful structures for inhibiting permeation of the non-aqueous solvent in the package include metal such as aluminum, iron or stainless, an inorganic material such as alumina or silica, an organic material such as a fluorine resin, a polyolefin or a polyether resin. Preferably, these substances may also be surface-treated to fit with the organic layer if necessary.

The useful shape for the material of the structure which inhibits permeation of the non-aqueous solvent in the package is powdery, flaky or filament form while a material of a variety of sizes can be used considering the width and the length of the adhesion part, the thickness of the organic layer and the like.

As to the structure made of a powdery material, for example, particle size of the material is preferably about 0.1 to 100 µm, more preferably about 1 to 20 µm. Small particle size tends to make it difficult for the structure to be positioned within the adhesive effectively while large particle size causes to form clearance showing a tendency that diffusion of the non-aqueous solution is not prevented sufficiently.

As to the structure made of a flaky material, for example, thickness of the material is preferably about 0.5 to 200 µm, more preferably 5 to 100 µm. When it is thin, there is a tendency that diffusion of the non-aqueous solvent is not prevented sufficiently. When it is thick, heat-sealing tends to be difficult. Referring to the area, the longest diameter is preferably about five times, more preferably about ten times the thickness. This flaky material is easier to be aligned to prevent effectively the non-aqueous solution from diffusion. When the longest diameter is too short, the alignment of the structure tends to be difficult, leading to decrease of the advantage.

As to the structure made of filaments, for example, diameter of the filament is preferably about 0.1 to 200 µm, more preferably about 5 to 100 µm while length of the filament is preferably at least 10 µm, more preferably at least 5 mm. When it is larger than the adhesion part, it is folded or cut to use if necessary. When the diameter of the filament is small the effect on preventing diffusion of a non-aqueous solution tends to be low. When it is large, heat-sealing tends to be difficult. When the length of the filament is long, the effect on preventing diffusion of a non-aqueous solution tends to be low.

It is preferable to position the filament structure so that it parallels the longitudinal direction of the adhesion part, in other words, across the diffusion direction of the non-aqueous solution in order to prevent the diffusion since such a construction acts most effectively.

Preferably, the structure for inhibiting permeation of the non-aqueous solvent in the package is distributed inwardly to the package interior side, that is, more to the inside from the centric position between the interior edge and the exterior edge of the adhesion part. When the structure for inhibiting permeation of a non-aqueous solvent such as a solvent of a non-aqueous electrolytic solution in the package is not distributed inwardly to the package interior side, the effect on preventing permeation of a non-aqueous solution and the like may be reduced at the organic layer, and prevention of water invasion and maintenance of strength may not be achieved sufficiently.

Regarding the package for a material containing a non-aqueous solvent, which has a bag construction made by adhesion of a part of a lamination film of an aluminum layer 1 and a polypropylene layer 2 with an adhesive, adhesion construction thereof containing an aluminum fiber 5 in an organic layer (a polypropylene layer) between the aluminum layers at the adhesion part is schematically shown in Fig. 1.

When a hot-melt adhesive in the form of tape is used for adhesion of the film, previous inclusion of a structure for inhibiting permeation of a non-aqueous solvent in the package into the hot-melt adhesive tape improves workability.

A package of the present invention can be applied to various package products using a non-aqueous solvent such as a non-aqueous electrolytic battery. When the package of the present invention is used for a non-aqueous electrolytic battery, possible battery construction is a laminated construction of plane electrodes and separators, a rolled out construction, a folded construction or a combination thereof.

Current collector terminals (tabs) for the electrodes of the battery are drawn out from an adhesion part of the package. As to adhesion of this part a conductive material should not be used for the structure, which inhibits permeation of a non-aqueous solvent, in order to maintain insulation, or there should be another insulating layer without a structure for inhibiting permeation of the non-aqueous solution.

As the non-aqueous solvent for an electrolytic solution an ether solvent such as dimethoxy ethane or diethyl ether, or a carbonate or ester solvent such as ethylene carbonate or propylene carbonate is used alone or in combination thereof. LiPF₆, LiClO₄, LiBF₄ and the like can be used as an electrolyte.

Hereinafter more concrete examples of the present invention are explained in detail but the present invention is not limited thereto.

### EXAMPLE 1

### (Process for Preparing Film)

A piece of 15-µm-thick aluminum foil was laminated with a 12-µm-thick film of polyethylene terephtharate by using an urethane adhesive (5 µm in thickness). A resin layer was formed by extrusion coating of polyethylene on the opposite side of the aluminum foil in a thickness of 50 µm to prepare an aluminum laminated film. The film was cut into pieces of 70 mm × 120 mm.

### (Process for Preparing Battery)

The construction of the non-aqueous electrolytic battery prepared in Example 1 is schematically shown in Fig. 2. Explanation is made as to a process for preparing a battery with reference to Fig. 2 in the following.

A positive electrode material was prepared by applying a paste for a positive electrode active material obtained by mixing 87 % by weight of LiCoO₂, 8 % by weight of a graphite powder (KS-6, available from LONZA Co., Ltd. and 5 % by weight of poly(vinylidene fluoride) as a binder resin onto a piece of 20-µm-thick aluminum foil according to Doctor Blade method in the thickness of about 100 µm.

A negative electrode material was prepared by applying a paste for a negative electrode active material obtained by mixing 95 % by weight of mesophase microbeads carbon (available from Osaka Gas Co., Ltd.) and 5 % by weight of poly(vinylidene fluoride) as a binder onto a piece of 12-µm-thick copper foil according to Doctor Blade method in a thickness of about 100 µm.

Each of the positive and negative electrode materials was cut into a size of 50 mm × 200 mm to prepare a positive electrode and a negative electrode, and current collector terminals (tabs) were attached thereto. The separator cut into a size of 52 mm × 210 mm was interposed between the positive electrode and the negative electrode. Upon rolling out the same in a width of about 5 cm, it was fixed by using a strip of polyimide tape.

Thereafter, the rolled out electrode 6 was interposed by the aluminum laminated film as shown in Fig. 2, and each side end where no tab is positioned was heat-sealed in a width of about 7 mm. In this event an aluminum fiber having the diameter of 150 µm was distributed at a position about 2 mm from the interior edge of the adhesion part to interpose the aluminum fiber inside the adhesion part. The end of the aluminum fiber at the tab side of the battery was about 5 mm inward from the exterior edge of the aluminum laminated film.

Then an electrolytic solution of LiBF₄ as an electrolyte in ethylene carbonate and 1,2-dimethoxyethane as a solvent was injected from the remaining edge, followed by preliminary charge, and then the edge was heat-sealed.

### (Evaluation of Package Performance)

The prepared battery was kept under conditions of temperature of 80°C and humidity of 100 % for four weeks.

After that the battery was opened to measure the amount of water invaded inside (water invasion amount) according to Karl Fischer's method while strength at the adhesion part was measured based on peeling strength before and after the keeping.

The water invasion amount after the keeping was 11 mg. The peeling strength of the adhesion part including the aluminum fiber was 30 g/cm before the keeping and 25 g/cm after the keeping, respectively.

### EXAMPLE 2

A battery was prepared in the same manner as in Example 1 except that a poly(vinylidene fluoride) fiber having the diameter of 45 µm was used instead of the aluminum fiber. In this case the poly(vinylidene fluoride) fiber was inserted even into the side of the adhesion part from which the tabs are drawn out.

### (Evaluation of Package Performance)

The prepared battery was kept under the same conditions as that of Example 1 to evaluate performance of the package.

The water invasion amount after the keeping was 13 mg. The peeling strength of the adhesion part including the poly(vinylidene fluoride) fiber was 32 g/cm before the keeping and 28 g/cm after the keeping, respectively.

### COMPARATIVE EXAMPLE 1

A battery was prepared in the same manner as in Example 1 but without disposing any aluminum fiber.

### (Evaluation of Package Performance)

The prepared battery was kept under the same conditions as that of Example 1 to evaluate performance of the package.

The water invasion amount after the keeping was 25 mg. The peeling strength of the adhesion part where the aluminum fiber is to be disposed was 33 g/cm before the keeping and 10 g/cm after the keeping, respectively.

By comparing Examples 1 and 2 with Comparative Example 1, it has been found that the insertion of the aluminum fiber brings about decrease of the water invasion amount and prevents the peeling strength from decreasing.

### EXAMPLE 3

A polypropylene hot-melt adhesive having a thickness of about 30 µm was shaped by cutting into 7-mm-wide tapes. Aluminum fibers having the diameter of 50 µm were fixed thereto by light hot press at a position about 3 mm from an edge.

An aluminum laminated film and a battery content were prepared in the same manner as in Example 1 and each side end where no tab is positioned was heat-sealed by using the tapes of the hot-melt adhesive containing the aluminum fiber. Herein the aluminum fiber was distributed inwardly to the interior side of the battery. The end of the aluminum fiber at the tab side of the battery was about 5 mm inward from the edge of the aluminum laminated film. Then an electrolytic solution of LiBF₄ as an electrolyte in ethylene carbonate and 1,2-dimethoxyethane as a solvent was injected from the remaining edge followed by preliminary charge, and then the remaining edge was heat-sealed by using a hot-melt adhesive tape containing no aluminum fiber.

### (Evaluation of Package Performance)

The prepared battery was kept under the same conditions as that of Example 1 to evaluate performance of the package.

The water invasion amount after the keeping was 13 mg. The peeling strength of the adhesion part including the aluminum fiber was 28 g/cm before the keeping and 25 g/cm after the keeping, respectively.

### EXAMPLE 4

A battery was prepared in the same manner as in Example 3 except that a poly(vinylidene fluoride) fiber having the diameter of 45 µm was used instead of the aluminum fiber. In this case the poly(vinylidene fluoride) fiber was inserted even into the portion of the adhesion part from which tabs are drawn out, as well as to both side ends.

### (Evaluation of Package Performance)

The prepared battery was kept under the same conditions as that of Example 1 to evaluate performance of the package.

The water invasion amount after the keeping was 14 mg. The peeling strength of the adhesion part including the aluminum fiber was 29 g/cm before the keeping and 25 g/cm after the keeping, respectively.

### COMPARATIVE EXAMPLE 2

A battery was prepared in the same manner as in Example 3 except that a hot-melt adhesive agent tape containing no aluminum fiber was used instead of the hot-melt adhesive agent tape containing an aluminum fiber.

### (Evaluation of Package Performance)

The prepared battery was kept under the same conditions as that of Example 1 to evaluate performance of the package.

The water invasion amount after the keeping was 30 mg. The peeling strength of the adhesion part where an aluminum fiber is to be disposed was 30 g/cm before the keeping and 9 g/cm after the keeping, respectively.

By comparing Examples 3 and 4 with Comparative Example 2, it has been found that the insertion of the fiber brings about decrease of the water invasion amount and prevents the peeling strength from decreasing.

According to the invention of Claim 1, it is possible to provide a package for a material containing a non-aqueous solvent by which water invasion from outside is lowered and adhesion strength is less decreased over the long term.

According to the invention of Claim 2, it is possible to provide a package for a material containing a non-aqueous solution by which water invasion from outside is lowered and adhesion strength is less decreased over the long term with high workability.

According to the invention of Claims 3, 5 and 7, it is possible to provide a package for a material containing a non-aqueous solution by which water invasion from outside is particularly lowered and adhesion strength is less decreased particularly over the long term.

According to the invention of Claims 4, 6 and 8, it is possible to provide a package for a material containing a non-aqueous solution by which water invasion from outside is particularly lowered and adhesion strength is less decreased particularly over the long term with high workability.

According to the invention of Claims 9 and 10 it is expected to obtain a battery having a lengthened life and high reliability since water invasion from outside is lowered and adhesion strength is less decreased over the long term.

### INDUSTRIAL APPLICABILITY

The package for a material containing a non-aqueous solvent according to the present invention can be applied to various package products using non-aqueous solvent. Regarding the application to batteries, it can be used not only for a lithium ion secondary battery of an organic electrolytic solution type or a gel electrolyte type, but also for a primary battery such as a lithium battery or another secondary battery.

## Claims

1. A package for a material containing a non-aqueous solvent, having a bag construction made by adhesion of a part of a lamination film comprising a metal layer and a resin layer,
wherein a structure is positioned in an organic layer between the metal layers at the adhesion part to inhibit permeation of the non-aqueous solvent contained in the package.

2. A package for a material containing a non-aqueous solvent, having a bag construction made by adhesion of a part of a lamination film comprising a metal layer and a resin layer,
wherein a hot-melt adhesive tape containing a structure for inhibiting permeation of the non-aqueous solvent contained in the package is used for the adhesion of the film.

3. The package for a material containing a non-aqueous solvent of Claim 1,
wherein the material containing a non-aqueous solvent is an electrolytic solution, and
wherein the structure for inhibiting permeation of the non-aqueous solvent contained in the package is capable of reacting with or absorbing the electrolytic solution.

4. The package for a material containing a non-aqueous solution of Claim 2,
wherein the material containing a non-aqueous solvent is an electrolytic solution, and
wherein the structure for inhibiting permeation of a non-aqueous solvent contained in the package is capable of reacting with or absorbing the electrolytic solution.

5. The package for a material containing a non-aqueous solvent of Claim 1,
wherein the structure for inhibiting permeation of the non-aqueous solvent contained in the package is distributed at the adhesion part inwardly to the package interior side.

6. The package for a material containing a non-aqueous solvent of Claim 2,
wherein the structure for inhibiting permeation of the non-aqueous solvent contained in the package is distributed at the adhesion part inwardly to the package interior side.

7. The package for a material containing a non-aqueous solvent of Claim 1,
wherein the structure for inhibiting permeation of the non-aqueous solvent contained in the package is linear and positioned in parallel to the longitudinal direction of the adhesion part.

8. The package for a material containing a non-aqueous solvent of Claim 2,
wherein the structure for inhibiting permeation of the non-aqueous solvent contained in the package is linear and positioned in parallel to the longitudinal direction of the adhesion part.

9. A battery using the package for a material containing a non-aqueous solvent of Claim 1.

10. A battery using the package for a material containing a non-aqueous solvent of Claim 2.
